## Europäisches Patentamt
## European Patent Office
## Office européen des brevets

(11) Veröffentlichungsnummer: **0 082 241**
**B1**

(12) **EUROPÄISCHE PATENTSCHRIFT**

(45) Veröffentlichungstag der Patentschrift:
09.04.86

(21) Anmeldenummer: 82104700.8

(22) Anmeldetag: 28.05.82

(51) Int. Cl.⁴: **H 02 M 3/335**

(54) Sperrwandler.

(30) Priorität: 23.12.81 CH 8246/81

(43) Veröffentlichungstag der Anmeldung:
29.06.83 Patentblatt 83/26

(45) Bekanntmachung des Hinweises auf die Patenterteilung:
09.04.86 Patentblatt 86/15

(84) Benannte Vertragsstaaten:
AT CH DE FR GB IT LI NL SE

(56) Entgegenhaltungen:
EP - A - 0 035 156
US - A - 3 911 352
US - A - 4 005 351
US - A - 4 156 273

Siemens Schaltbeispiele 1977/78, S. 132 ff.

(73) Patentinhaber: SIEMENS-ALBIS
AKTIENGESELLSCHAFT, EGA1/Verträge und Patente
Postfach, CH-8047 Zürich (CH)

(72) Erfinder: Diem, Heinrich, Langgrütstrasse 145,
CH-8047 Zürich (CH)
Erfinder: Fosco, Guido, Langäckerstrasse 1,
CH-8957 Spreitenbach (CH)

## Beschreibung

Die vorliegende Erfindung betrifft einen Sperrwandler gemäss dem Oberbegriff des Patentanspruches 1.

Zur Umwandlung einer Gleichspannung in eine andere höhere Gleichspannung werden manchmal geregelte Sperrwandler eingesetzt. Ein solcher Sperrwandler ist beispielsweise in der Siemens-Publikation "Schaltbeispiele", 1977/78, Seite 132ff beschrieben. Bei solchen Sperrwandlern stellt sich manchmal das Problem, den Umwandler derart aufzubauen, dass er kurzschlusssicher ist. Zu diesem Zweck ist aus der US-A.4,005,351 bekannt, einen Auswerter vorzusehen, der bei Ueberstrom anspricht und eine Unterbrechung des Stromflusses im Hauptstromkreis bewirkt.

Durch die vorliegende Erfindung soll eine spezielle Lösung zu diesem Problem angegeben werden. Dies wird erfindungsgemäss durch die im kennzeichnenden Teil des Patentansrpuches 1 angegebenen Massnahmen erreicht. Andere vorteilhafte Ausgestaltungen der Erfindung sind in weiteren Ansprüchen angegeben.

Die Erfindung wird nachfolende durch Beschreibung von Ausführungsbeispielen anhand von Zeichnungen näher erläutert. Es zeigt:

Fig. 1 das Schaltbild eines Sperrwandlers nach der Erfindung

Fig. 2 eine schematische Darstellung verschiedener Signale im Sperrwandler nach Fig. 1.

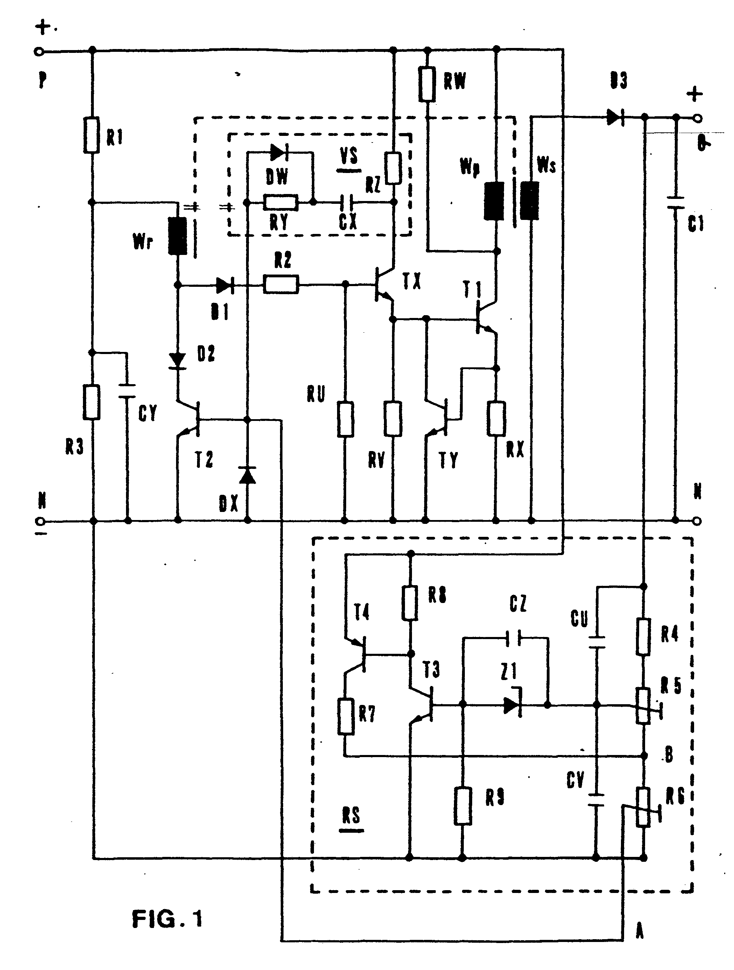

Der Sperrwandler gemäss Fig. 1 weist einen Transformator mit einer Primärwicklung Wp, einer Sekundärwicklung Ws und einer Rückkopplungswicklung Wr auf. Die Primärwicklung Wp ist zwischen dem eingangsseitigen Pluspolanschluss P des Sperrwandlers und dem Kollektor eines npn-Transistors T1 eingefügt, dessen Emitter über einen Widerstand RX mit dem Minuspolanschluss N verbunden ist. Der Anschluss p ist über die Reihenschaltung eines Widerstandes R1, der Wicklung Wr, einer Diode D1, eines weiteren Widerstandes R2 und der Basis-Emitter-Strecke eines npn-Transistors TX mit der Basis des Transistors T1 verbunden, wobei die Diode D1 in Druchlassrichtung geschaltet ist.

Der Anschluss N des Sperrwandlers ist einerseits über einen Widerstand RU mit der Basis des Transistors TX und andererseits über die Parallelschaltung eines Widerstandes RV und der Emitter-Kollektor-Strecke eines dritten npn-Transistors TY mit der Basis des Transistors T1 vebunden, an dessen Emitter die Basis des TransistorsTY angeschlossen ist. Zudem ist zwischen dem Anschiuss N und der Anode der Diode D1die Reihenschaltung der Emitter-Kollektor-Strecke eines weiteren npn-Transistors T2 und einer in Durchlassrichtung gepolten Diode D2 eingefügt: Die Basis des Transistors T2 ist einerseits über eine in Sperrrichtung gepolte Diode DX mit dem Anschluss N und andererseits über die Reihenschaltung eines Widerstandes RY, eines Kondensators CX und eines Widerstandes RZ mit dem Anschluss P vebunden. Ausserdem ist ein weiterer Widerstand R3 zwischen dem gemeinsamen Anschluss der Wicklung Wr und des Widerstandes R1 und dem Anschluss N eingefügt. Die Widerstände RY und RZzusammen mit dem Kondensator CX und einer parallel zum Widerstand RY geschalteten Diode DW bilden eine Verzögerungsschaltung VS.

Sekundärseitig ist die Wicklung Ws einerseiis über eine Diode D3 mit dem ausgangsseitigen Pluspolanschluss Q des Sperrwandlers und andererseits mit dem Anschluss N verbunden, wobei zwischen den Anschlüssen Q und N ein Kondensaior C1 eingefügt ist. Der Sperrwandler weist zudem eine Regelschaltung RS auf, deren Ausgangsanschluss A mit der Basis des Transistors T2 vebunden ist. Diese RegelschaltungRS enthält die Reihenschaltung dreier Widerstände R4, R5 und R6, die zwischen denAnschlüssen Q und N eingefügt sind. Der Ausgangsanschluss A ist mit der mittleren Anzapfung des einstellbaren Widerstandes R6 vebunden. Die mittlere Anzapfung des mittleren einstellbaren Widerstandes R5 ist über eine in Sperrrichtung gepolte Zenerdiode Z1 mit der Basis eines weiteren npn-Translstors T3 verbunden, an dessenKollektor die Basis eines pnp-Transistors T4 angeschlossen ist. Dabei ist ein Widerstand R7 zwischen dem Kollektor des Transistors T4 und dem gemeinsamen Anschluss der Widerstände R5 und R6 eingefügt, der den Anschluss 8 der Regelschaltung RS bildet. Ferner ist der Emitter des Transistors T3 mit dem Anschluss N und der Kollektor desselben über einen Widerstand R8 mit dem Emitter des Transistors T4 und dem Anschluss P verbunden. Zwischen der Basis des Transistors T3 und dem Anschluss N ist ein hochohmiger Widerstand R9 eingefügt.

Der Sperrschwinger kann zusätzilch parallel zur Wicklung Wp einen WiderstandRW, parallel zum Widerstand R3 einen Kondensator CY und parallel zur Zenerdiode $Z_1$ einen weiteren Kondensator CZ aufweisen. Zudem kann zwischen der mittleren Anzaptung des Widerstandes R5 und dem Anschluss Q ein Kondensator CU und zwischen derselben Anzapfung und dem Anschluss N ein weiterer Kondensator CV eingefügt sein.

Der Sperrwandler nach Fig.1 funktioniert folgendermassen:

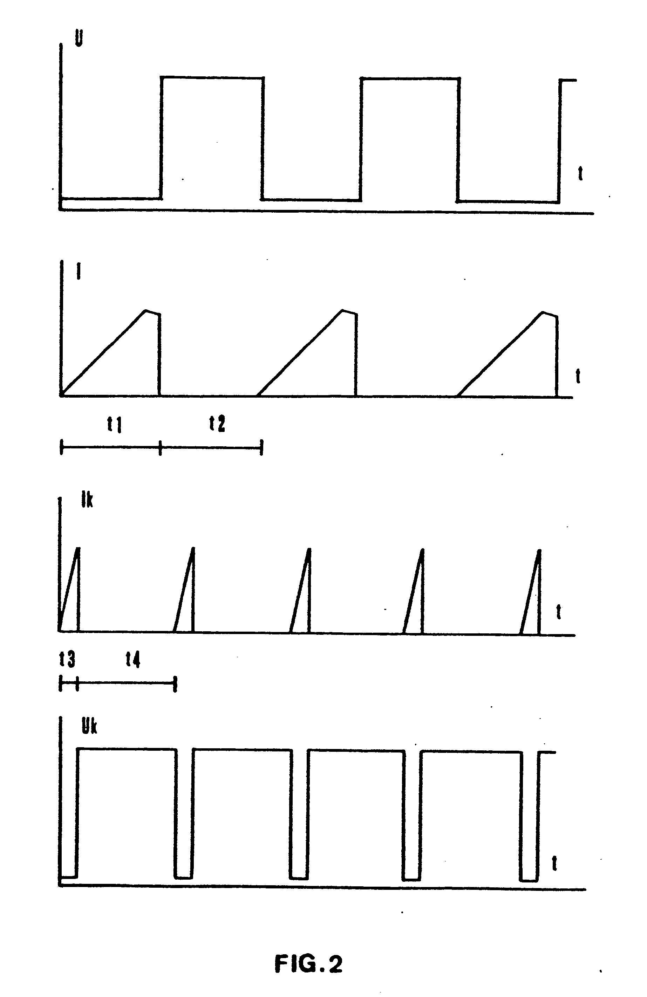

Die mit jeweils zwei Grossbuchstaben bezeichneten Elemente dienen zur Verbesserung der bekannten Schaltung nach SIEMENS "Schaltbeispiele", 1977/78, Seite 133. Ein ähnlicher Sperrwandler ist auch aus der EP-A-0035156 bekannt, bei der der Transistor TY durch elne Zenerdiode ersetzt ist. Die prinzipielie Arbeitsweise solcher Sperrwandler ist an sich bekannt und wlrd daher hler nur in grossen Zügen wiedergegeben. Der Sperrschwinger ist vorzugsweise derart dimensioniert, dass die Impulsdauert1 (Fig.2) des Stromes 1 über die Wicklung Wp und den Transistor T1 im Normalbetrieb etwa gleich gross wie die Dauer t2 der Sperrzustände des Transistors T1 ist, so dass der nahezu symmetrische Verlauf der Spannung U (Fig.2) am Kollektor des Transistors T1 eine Grundfrequenz fr aufweist, die im Bereich fr > 20 kHz liegt. Der Wert der Frequenz fr braucht zwar nicht besonders eng tolerieri zu sein, bleibt jedoch für eine gegebene Schaltung relativ konstant, da er hauptsächlich von der Dimensionierungdes Transformators und vom Spannungsabfall über dem Widerstand Rx abhängt. Die auf die Sekundärwicklung Ws induzierte Spannung erzeugt einen Strom, der über die Diode D3 geführi wird und den Kondensator C1 auflädt, bis er eine Spannung Vq erreicht hat. Solange der Sperrwandler nicht überlastet ist und die Ausgangsspannung Vq amAnschluss Q einen oberen Spannungsgrenzweri Vo nicht überschritten hat, schwingt der Sperrwandler etwa mit der Frequenz fr, da der Transistor T3 und daher auch derTransistor T4 gesperrt sind. Wird aber Vq = Vo, so bekommt der Transistor T3 einenBasisstrom über die Zenerdiode Zl zugeführt, so dass er daher auch die Transistoren T4 und T2 öffnet. Dadurch sperren nacheinander die Transistoren Tx und T1; der Sperrwandler ist ausgeschaltet und kann nicht mehr schwingen. Von nun an entlädt sich der Kondensator C1 über die mit den Anschlüssen Q und N verbundene Last, bis die Ausgangsspannung Vq einen unteren Spannungsgrenzwert Vu erreicht hat. Die Spannungsdifferenz Vo - Vu wird Hysteresespannung Vh genannt und kann mit Hilfe des Widerstandes R6 eingestellt werden. Wird nun also Vq = Vu, so sperren wieder nacheinander die Transistoren T3, T4 und T2 und der Sperrschwinger beginnt wiederzu schwingen.

Die Kurzschlussfestigkeit des Sperrschwingers wird durch die Verzögerungsschaitung VS erreicht. Wenn aufgrund eines sekundärseitigen Kurzschlusses der Transformator überlastet wird, so wird die scheinbare Induktivität der Primärwicklung Wp verkleinert und die Impulsdauer t3 des Stromes Ik über die Wickiung Wp und den Transistor T1 erreicht dadurch einen Wert, der, viel kleiner als der des Sollwertes tl sein kann. Wenn der Transistor T1 sperrt, liegt der Kollektor von Tx an der die Batteriespannung und der Kondensator CX entlädt sich langsam mit der Zeitkonstante t4 ≅ CX (RZ + RY),da RY < < RZ ist. Da t4 nahezu gleich oder kleiner als t2 ist, beeinflusst die Verzögerungsschaltung die normale Abeitsweise des Sperrschwingers nicht. Im Kurzschlussfall bestimmt sie jedoch diese minimale Sperrphase, indem der Transistor T2 während der Zeitdauer t4 geöffnet ist. Dadurch wird ein günstiges Verhältnis zwischen der Arbeitsphase der Dauer t3 und der Sperrphase der Dauer t4 (Fig.2) in den TransistorenTX und T1 erreicht, so dass in Kurzschlussfall keine thermische Beschädigung insbesondere des Endtransistors T1 eintreten kann. Sobald der Kondensator CX soweit entladen ist, dass dadurch die 8asis-Emitter-Spannung des Transistors T2 kleiner als 0,7 V ist, kann der Sperrschwinger wieder anschwingen, wobei gleichzeitig der Kondensator CX über die Dioden DW und DX während der Zeit t3 sofort vollständig entladen wird. Sofem der Kurzschluss noch besteht, beginnt der Zyklus von neuem. Verschwindet der Kurzschluss jedoch, so arbeitet der Sperrschwinger wieder normal.

Der Transistor T2 dient verschiedenen Zwecken. Er arbeitet zum einen in bekannter Weise als ein von der Regelungsschaltung RS gesteuerter Schalter. Zum anderen arbeitet er sowohl als Auswerter als auch als Schalter für die Verzögerungsschaltung VS. Der Sperrwandler kann somit auch mit einer anderen Verzögerungsschaltung,mit elnem dazugehörigen Auswerter und mit mindestens einem Schalter anstelle der Verzögerungsschaltung VS und des Transistors T2 aufgebaut sein, und zwar unabhängig davon, ob der Sperrwandler geregelt ist oder nicht. Dies ist beispielsweise der Fall, wenn man eine stabilisierte Eingangsspannungsquelle und eine konstante Last hat. Als Grundschaltung des Sperrwandiers können auch andere als die hier und in den zwei erwähnten Literaturstellen angcgebenen Schaltungen verwendet werden.

**Patentansprüche**

1. Sperrwandler mit einem Hauptstromkreis gebildet durch die Serienschaltung eines Schalttransistors (T1) und der Primärwicklung (Wp) eines Transformators, wobeiin einer Rückkopplungswicklung (Wr) des Transformators ein Steuerstrom für den Schalttransistor (T1) erzeugt wird, und mit einem wechselspannungsmässig parallel zur Rückkopplungswicklung (Wr) des Transformators eingefügten Auswerter (T2),der bei Ansprechen eine Unterbrechung des Stromflusses im Hauptstromkreis (T1, Wp) bewirkt, <u>dadurch gekennzeichnet</u>, dass, um den Sperrwandler kurzschlusssicher (RS) aufzubauen, der Auswerter (T2) derärt an eine Verzögerungsschaltung (VS) angeschlossen ist, dass beim Auftreten eines abnormal Kurzen Stromimpulses im Hauptstromkreis der Auswerter (T2) anspricht und während einer Verzögerungszeit vorgegebener Dauer (t4) den Stromfluss im Hauptstromkreis (T1, Wp) unterbricht.

2. Sperrwandler nach Patentanspruch 1, <u>dadurch gekennzeichnet</u>, dass die Verzögerungsschaltung (VS) durch die Reihenschaltung eines ersten Widerstandes (RZ), eines Kondensators (CX) und der Parallelschaltung eines zweitenWiderstandes (RY) und einer ersten Diode (DW) gebildet ist, wobei ein Anschluss derVerzögerungsschaltung (VS) an die Basis eines als Auswerter arbeitenden Transistors (T2) angeschlossen ist, dessen Kollektor über eine zweite Diode (D2) mit dem aktiven Anschluss der Rückkopplungswicklung (Wr) des Transformators vebunden ist, unddass der Verbindungspunkt der Rückkopplungswicklung (Wr) mit der zweiten Diode (D2) über eine weitere Diode (D1) an die Basis eines als Schalter betriebenen Transistors (TX) angeschlossen ist, dessen Kollektor mit dem gemeinsamen Anschluss des ersten Widerstandes (RZ) und des Kondensators (CX) und dessen Emitter einerseits mitder Basis des Schalttransistors (T1) und andererseits über einen weiteren Widerstand (RV) mit dem Emitter des Auswerte-Transistors (T2) verbunden ist.

3. Sperrwandler nach Patentanspruch 2, dadurch gekennzeichnet, dass an die Basis des Auswerte-Transistors (T2) zusätzlich eine Regelschaltung (RS) für die Ausgangsspannung angeschlossen ist.

## Claims

1. A blocking oscillator type converter with a main circuit formed by the series combination of a switching transistor (TI) and the primary winding (Wp) of a transformer, where a control current for the switching transistor (T1) is produced in a feedback winding (Wr) of the transformer, and with an evaluator (T2) which is inserted in parallel to the feedback winding (Wr) of the transformer for a.c., and which interrupts the current flow in the main circuit (T1,Wp), when it responds, characterised in that in order to construct the blocking oscillator type converter so as to be resistant to short circuits (RS), the evaluator (T2) is connected to. a delay circuit (VS) in such manner that on the occurrence of an abnormally short current pulse in the main circuit the evaluator (T2) responds and during a delay time of a predetermined duration (t4) interrupts the current flow in the main circuit (T1,Wp).

2. A blocking oscillator type converter as claimed in Claim 1, characterised in that the delay circuit (VS) is formed by the series combination of a first resistor (RZ), a capacitor (CX), and a parallel combination of a second resistor (RY) and a first diode (DW), where a terminal of the delay circuit (VS) is connected to the base of a transistor (T2) which operates as an evaluator and whose collector is connected via a second diode (D2) to the active terminal of the feedback winding (Wr) of the transformer, and that the connection point of the feedback winding (Wr) to the second diode (D2) is connected via a further diode (D1) to the base of a transistor (TX) which operates as a switch and whose collector is connected to th e common terminal of the first resistor (RZ) and the capacitor (CX), and whose emitter is connected to the base of the switching transistor (T1) and via a further resistor (RV) to the emitter of the evaluator transistor (T2).

3. A blocking oscillator type converter as claimed in Claim 2, characterised in that a regulating circuit (RS) for the output voltage is connected to the base of the evaluator transistor (T2).

## Revendications

1. Convertisseur à oscillateur bloqué. avec un circuit principal formé par un montage série d'un transistor de commutation (T1) et de l'enroulement primaire (Wp) d'un transformateur, un courant de commande pour le transistor de commutation (T1) étant produit dans un enroulement de réinjection (Wr) du transformateur, et avec un évaluateur (T2) du point de vue de la tension alternative monté en parallèle sur l'enroulement de réinjection (Wr) du transformeteur et provoquant, lorsqu'il est sollicité, l'interruption du passage de courant dans le circuit principal (T1, Wp), caractérisé par le fait que pour constituer le convertisseur de manière à ce qu'il soit protégé contre les courts-circuits, l'évaluateur (T2) est relié de telle manière à un circuit à retard (WS) qu'à l'apparition d'une impulsion de courant anormalement courte dans le circuit principal, l'évaluateur (T2) est amené dans son état de fonctionnement et interrompt, pendant un temps de retard de durée (T4) prédéterminée, le passage du courant dans le circuit principal (T1, Wp).

2. Convertisseur à oscillateur bloqué selon la revendication 1, caractérisé par le fait que le circuit à retard (VS) est formé par le montage série d'une première résistance (RZ), d'un condensateur (CX) et du circuit parallèle constitué par une seconde résistance (RY) et par une première diode (DW), une borne de raccordement du circuit à retard (VS) étant reliée à la base d'un transistor (T2) fonctionnant comme évaluateur, et dont le collecteur est relié, par l'intermédiaire d'une seconde diode (D2), avec la borne active de l'enroulement de réinjection (Wr) du transformateur, et que le point de liaison de l'enroulement de réaction (Wr) et de la seconde diode (D2) est relié, par l'intermédiaire d'une diode supplémentaire (D1),à la base d'un transistor (TX) opérant comme commutateur, et dont le collecteur est relié à la borne commune de la première résistance (RZ) et du condensateur (CX) et dont l'émetteur est relié, d'une part, à la base du transistor de commutation (T1), et, d'autre part, par l'intermédiaire d'une résistance supplementtaire (RV),à l'émetteur du transistor (T2) opérant comme évaluateur.

3. Convertisseur à oscillateur bloqué selon la revendication 2, caractérisé par le fait qu'à la base du transistor (T2) opérant comme évaluateur, est, de plus, relié à un circuit de réglage (RS) pour la tension de sortie.

FIG . 1

**FIG. 2**